(19) **Europäisches Patentamt European Patent Office Office européen des brevets**

(11) **EP 4 359 271 B1**

(12) **FASCICULE DE BREVET EUROPEEN**

(45) Date de publication et mention
de la délivrance du brevet:
**17.12.2025 Bulletin 2025/51**

(21) Numéro de dépôt: **22734321.7**

(22) Date de dépôt: **23.06.2022**

(51) Classification Internationale des Brevets (IPC):
**B60T 8/00** (2006.01) **B60T 8/172** (2006.01)
**B60T 8/32** (2006.01) **B60T 13/74** (2006.01)
**H02P 29/40** (2016.01)

(52) Classification Coopérative des Brevets (CPC):
**B60T 8/32; B60T 8/00; B60T 8/327; B60T 13/741;
B60T 17/22; H02P 6/18; H02P 23/14;**
F16D 2066/005

(86) Numéro de dépôt international:
**PCT/EP2022/067182**

(87) Numéro de publication internationale:
**WO 2022/268958 (29.12.2022 Gazette 2022/52)**

(54) **PROCÉDÉ DE RÉGLAGE DE LA FORCE DE SERRAGE EXERCÉE PAR UN FREIN ÉLECTROMÉCANIQUE**

VERFAHREN ZUM EINSTELLEN DER VON EINER ELEKTROMECHANISCHEN BREMSE AUSGEÜBTEN KLEMMKRAFT

METHOD FOR ADJUSTING THE CLAMPING FORCE EXERCISED BY AN ELECTROMECHANICAL BRAKE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.06.2021 FR 2106673**

(43) Date de publication de la demande:
**01.05.2024 Bulletin 2024/18**

(73) Titulaire: **Astemo France**
**93700 Drancy (FR)**

(72) Inventeurs:
• **RAMIREZ HERNANDEZ, Carlos Eduardo
92130 ISSY LES MOULINEAUX (FR)**
• **RAMDANE, Abdessamed
60000 Beauvais (FR)**

(74) Mandataire: **LLR
2, rue Jean Lantier
75001 Paris (FR)**

(56) Documents cités:
**WO-A1-2019/054376 WO-A1-2019/131659
DE-A1- 102014 203 350**

**Description**

L'invention se rapporte au domaine des actionneurs de freinage de véhicule automobile, plus particulièrement un procédé de réglage de la force de serrage exercée par un frein électromécanique.

Un système de freinage d'un véhicule automobile comporte en général des moyens mécaniques de serrage du frein comprenant notamment des moyens de friction, tels que des plaquettes de frein, reliés à un actionneur apte à déplacer ces moyens de friction en direction de la roue du véhicule pour l'enserrer et ainsi freiner le véhicule par friction, ou de les écarter dans le but de cesser le freinage. Dans le cas d'un frein électromécanique, les moyens mécaniques de serrage sont commandés par un moteur électrique muni d'un arbre rotatif qui les entraîne.

Pour modifier la vitesse de rotation d'un moteur $\omega$ (radis), il faut faire varier la force électromotrice E. Cette dernière est proportionnelle à la tension :

$$E = K.\omega = U - R.i$$

Avec :

K : la constante moteur
U : la tension
i : l'intensité
R : la résistance du moteur

Il est ainsi connu, par exemple des documents WO2019131659 et DE102014203350, de modifier la vitesse de rotation d'un moteur $\omega$ (rad/s) au moyen d'une commande en tension du type PWM (« Pulse width modulation » en anglais) ou MLI (« Modulation en Largeur d'Impulsion »).

Cela consiste à alimenter le moteur avec une tension en créneaux. La tension moyenne dépend alors du rapport cyclique T0/T. La vitesse $\omega$ varie en fonction de cette tension moyenne.

Ainsi pour commander un moteur électrique, il faut déterminer la commande MLI, donc une commande en tension, la constante moteur K, ainsi que la résistance moteur R. L'estimation de la vitesse $\omega$ est également importante pour estimer l'angle de rotation du moteur CC, car il n'y a pas de capteur d'angle sur ce type de moteur.

Actuellement, la résistance du moteur est calculée pendant le pic de courant de démarrage dans un moteur à courant continu (CC).

Cependant, la valeur de la résistance moteur évolue en fonction de la température, et la température évolue au cours du freinage. Avec les méthodes actuelles, il y a donc un risque de surestimer ou sous-estimée la valeur de la résistance, et donc, soit de ne pas freiner suffisamment, soit d'augmenter la friction et donc de limiter la durée de vie des freins.

L'invention a ainsi pour but de fournir un procédé, comme défini dans la revendication 1 ci-jointe, pour régler la force de serrage exercée par un frein électromécanique d'un véhicule automobile, s'affranchissant des problèmes précités.

A cet effet, l'invention a pour objet un procédé pour régler la force de serrage exercée par un frein électromécanique d'un véhicule automobile, le frein comportant un moteur électrique muni d'un arbre rotatif destiné à entraîner des moyens mécaniques de serrage de frein, le moteur électrique étant commandé au moyen d'une commande en tension du type PWM, dans lequel on estime la vitesse de rotation du moteur ($\omega$) à partir d'une estimation de la résistance du moteur (R*) et d'une estimation de la constante moteur (K*), puis on détermine la force de serrage à partir de l'estimation de la vitesse de rotation du moteur ($\omega$), dans lequel on met à jour l'estimation de la résistance du moteur pendant une phase inactive (du contrôleur (ECU) du moteur ) d'absence de commande en tension (appelée « idle phase » et correspondant à une phase d'approche des plaquettes vers le disque).

En calculant la résistance du moteur pendant la phase inactive (« idle phase ») du contrôleur du moteur, et en mettant à jour constamment cette estimation, il est possible d'obtenir une estimation plus précise de la résistance du moteur. De plus, une telle solution peut être implémenté avec ou sans capteur spécifique.

Enfin, un tel procédé peut être utilisé pour détecter des anomalies sur la première estimation de la résistance, voire en tant que capteur d'angle.

Le procédé peut en outre comporter l'une ou plusieurs des caractéristiques suivantes, prises seules ou en combinaison :

- on met à jour l'estimation de la résistance du moteur au moyen d'une fonction polynomiale d'ordre n, n étant supérieur ou égal à 2, centrée autour de la valeur nominale de la résistance moteur exprimée selon un nombre entier ; en utilisant seulement une fonction polynomiale du second degré, l'estimation de la résistance du moteur se fait à faible coût de calcul, et donc, cette équation simple et rapide à mettre en oeuvre permet d'observer l'évolution de la résistance du moteur, et par conséquence celle de la température, sur des périodes de temps plus courtes (inférieure à 1ms) ;
- on met à jour l'estimation de la résistance du moteur selon un pas d'échantillonnage inférieur à 1ms ;
- le frein comportant un moteur électrique muni d'un arbre rotatif destiné à entraîner des moyens mécaniques de serrage de frein, on détermine la force de serrage en fonction de la résistance du moteur mise à jour (R[n]), et un actionneur commande les moyens mécaniques de serrage de frein afin d'appliquer la force de serrage ainsi estimée ;
- on estime la résistance du moteur (R[n]) à un instant donné à partir d'une valeur précédente de la résistance du moteur (R[n-1]), et en utilisant une relation décrivant la résistance d'un solénoïde dans laquelle la tension (Vbat) est remplacée par la différence (V'bat) entre la tension (Vbat) et la tension du moteur (V) ;
- dans la relation décrivant la résistance d'un solénoïde, on remplace la fonction exponentielle par une série de Taylor d'ordre n, n étant supérieur ou égal à 2, centrée autour de la valeur nominale de la résistance moteur exprimée en entier ;
- on estime la résistance du moteur (R[n]) à un instant donné au moyen de la relation suivante :

$$R[n] = \frac{V'_{bat}\delta}{i[n]} + \left( \frac{i[n-1]R[n-1]}{i[n]} - \frac{V'_{bat}\delta}{i[n]} \right) \left( a. R[n-1]^2 + b. R[n-1] - c \right)$$

avec :

> $R[n]$ : résistance moteur au pas n
> $R[n-1]$ : résistance moteur au pas n-1
> $i[n]$ : intensité du moteur au pas n
> $i[n-1]$ : intensité du moteur au pas n-1
> $V'_{bat}\delta = V_{bat}\delta - K * w$ : avec Vbat, la tension d'alimentation du moteur, K, la constante moteur, et $\omega$, la vitesse de rotation du moteur.
> $a$ : coefficient polynomial
> b : coefficient polynomial
> c : coefficient polynomial

- les coefficients polynomiaux ont les valeurs suivantes :

$$a = \quad 0{,}4523$$

$$b = \quad 0{,}291$$

$$c = \quad 0{,}07027$$

- les coefficients polynomiaux a, b est c sont des entiers ;
- les coefficients polynomiaux ont les valeurs suivantes :

$$a = \quad 3$$

$$b = \quad 2037$$

$$c = \quad 490979$$

- les paramètres de la relation de détermination de la résistance moteur sont exprimés en uint32, après avoir appliqué des gains à et la résistance moteur en mΩ, la valeur de tension est exprimée avec un gain de 100000 l'intensité avec un gain de 100 ;
- on ajoute un gain de 7000000 ;
- la tension du moteur est déterminée en multipliant la constante moteur par la vitesse de rotation du moteur ;
- la vitesse de rotation du moteur est estimée ou mesurée au moyen d'un capteur embarqué.

L'invention se rapporte également à un **système de freinage**, comme défini dans la revendication 15 ci-jointe, arrangé pour mettre en œuvre le procédé selon l'invention.
Selon l'invention, le système de freinage peut comporter un moteur électrique de freinage, et un contrôleur apte à mettre en oeuvre le procédé selon l'invention.

Selon un exemple, la résistance nominale du moteur est de 0,34 $\Omega$ et l'inductance du moteur est de 0,000117 H, et le contrôleur a un temps d'échantillonnage (t) de 100ms.

Le contrôleur peut être un contrôleur 16 ou 32 bits.

L'invention se rapporte également à un **véhicule** comprenant le système de freinage selon l'invention.

## Brève description des figures

L'invention sera mieux comprise à la lecture de la description qui va suivre donnée uniquement à titre d'exemple et faite en se référant aux dessins annexés dans lesquels :

[Fig. 1]   la figure 1 est un exemple de résultat illustrant l'estimation de la résistance moteur, la tension du moteur, et l'intensité du moteur en fonction du temps ;

[Fig. 2]   la figure 2 est un grossissement de la figure 1 autour de 0,0688s ;

[Fig. 3]   la figure 3 est un schéma représentant un ordinogramme de fonctionnement du procédé de réglage de la force de serrage exercée par un frein électromécanique d'un véhicule automobile, selon un mode de réalisation particulier de l'invention ;

[Fig. 4]   la figure 4 est un schéma représentant un ordinogramme de fonctionnement du procédé de réglage de la force de serrage exercée par un frein électromécanique d'un véhicule automobile, selon un second mode de réalisation particulier de l'invention.

## Description détaillée

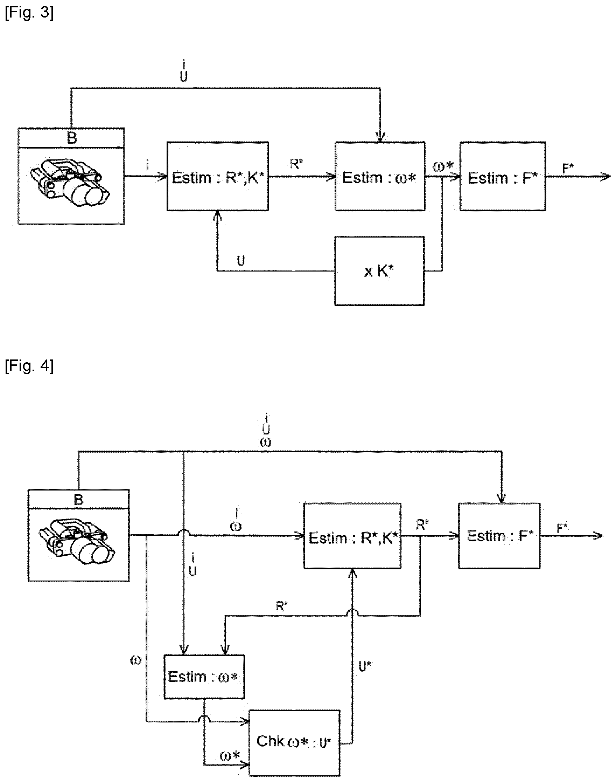

On a représenté aux figures 3 et 4 des schémas représentant un ordinogramme de fonctionnement du procédé de réglage de la force de serrage (F*) exercée par un frein électromécanique (B) d'un véhicule automobile, selon deux modes de réalisation particuliers de l'invention.

Le frein électromécanique (B) comprend, de façon classique, un moteur électrique muni d'un arbre rotatif destiné à entraîner des moyens mécaniques de serrage de frein (non représentés). Le moteur électrique est de préférence un moteur électrique à courant continu (CC ou DC en anglais). S'agissant d'un frein électromécanique connu en soi, il ne sera pas décrit davantage ici.

Le moteur électrique est commandé au moyen d'une commande en tension du type MLI (pour Modulation en Largeur d'Impulsions ou PWM (« Pulse width modulation ») en anglais).

Selon l'invention, le procédé comporte les étapes suivantes :

- on estime la résistance du moteur R* ;
- on estime la constante moteur K* ;
- on estime la vitesse de rotation du moteur $\omega$* à partir des estimations de résistance R* et de constante moteur K* ; puis
- on détermine la force de serrage F* à partir de l'estimation de la vitesse de rotation du moteur $\omega$*.

Sur les figures 3 et 4 :

- les deux premières étapes sont notées : « Estim : R*, K* » ;
- la troisième étape est notée : « Estim : $\omega$* » ;
- la quatrième étape est notée : « Estim :F* ».

La force de serrage F* est déterminée en continue, et pour obtenir une valeur précise et fiable de cette force de serrage, on met à jour en continue l'estimation de la résistance du moteur.

Pour ce faire, on met à jour l'estimation de la résistance du moteur pendant une phase inactive (« idle phase ») du contrôleur (ECU) du moteur, c'est-à-dire, pendant la phase d'absence de commande en tension (phase OFF de la commande en tension du type MLI).

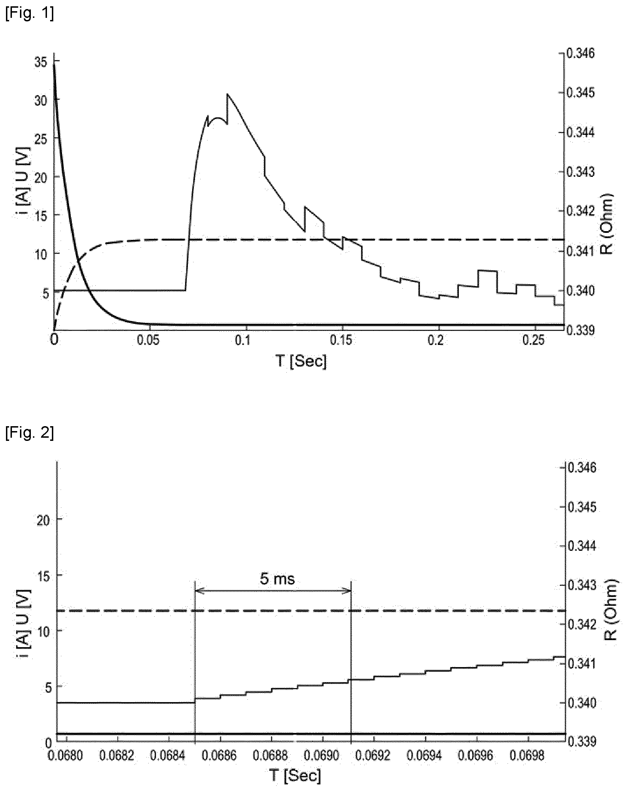

La phase « Idle » correspond à la phase d'approche des plaquettes vers le disque. Sur l'exemple de la figure 1, cette phase est visible à gauche. Ainsi on est à tension maximale disponible sans commande en tension. Cette dernière caractéristique permet d'améliorer l'estimation de la résistance du moteur R* et de la constante moteur K*.

Pour ce faire, et de façon avantageuse, on met à jour l'estimation de la résistance du moteur au moyen d'une fonction polynomiale d'ordre n, n étant supérieur ou égal à 2, centrée autour de la valeur nominale de la résistance moteur exprimée selon un nombre entier.

Ainsi, le temps de calcul de la mise est à jour est très rapide, et permet ainsi une mise à jour de l'estimation de la résistance du moteur pendant la phase inactive (« idle phase ») du contrôleur (ECU) du moteur même lorsque cette phase inactive est de l'ordre d'une milliseconde.

On entend par « continue » un calcul et une mise à jour selon un pas d'échantillonnage inférieur à 1ms.

Ainsi, la force de serrage F* est déterminée en continue à partir de la valeur de la résistance moteur mise à jour (R[n]). Ensuite, un actionneur commande les moyens mécaniques de serrage de frein afin d'appliquer la force de serrage ainsi déterminée.

Selon un exemple de réalisation, on estime la résistance du moteur (R[n]) à un instant donné à partir d'une valeur précédente de la résistance du moteur (R[n-1]), et en utilisant une relation décrivant la résistance d'un solénoïde dans laquelle la tension (Vbat) est remplacée par la différence (V'bat) entre la tension (Vbat) et la tension du moteur (U). Ainsi, la fonction permettant de mettre à jour la résistance du moteur s'écrit :

$$R[n] = \frac{V'_{bat}\delta}{i[n]} + \left( \frac{i[n-1]R[n-1]}{i[n]} - \frac{V'_{bat}\delta}{i[n]} \right) e^{-\frac{t}{\frac{L}{R[n-1]}}}$$

Pour obtenir une fonction polynomiale d'ordre n, on remplace, selon en mode préférentiel, la fonction exponentielle de la relation décrivant la résistance d'un solénoïde, par une série de Taylor d'ordre n, n étant supérieur ou égal à 2, centrée autour de la valeur nominale de la résistance moteur exprimée en entier. Ainsi, la fonction permettant de mettre à jour la résistance du moteur s'écrit :

$$R[n] = \frac{V'_{bat}\delta}{i[n]} + \left( \frac{i[n-1]R[n-1]}{i[n]} - \frac{V'_{bat}\delta}{i[n]} \right) (a.R[n-1]^2 + b.R[n-1] - c)$$

avec :

- $R[n]$: résistance moteur au pas n
- $R[n-1]$: résistance moteur au pas n-1
- $i[n]$: intensité du moteur au pas n
- $i[n-1]$: intensité du moteur au pas n-1
- $V'_{bat}\delta = v_{bat}\delta - K * w$:avec Vbat, la tension d'alimentation du moteur, $K$, la constante moteur, et $w$, la vitesse de rotation du moteur.
- $t$: pas d'échantillonnage
- $L$: inductance moteur
- $a$ :coefficient polynomial
- b :coefficient polynomial
- c :coefficient polynomial

Afin, de réduire encore plus le temps de calcul de la mise à jour, les paramètres de la relation de détermination de la résistance moteur sont exprimés en entier du type « uint32 », et non en réel du type « floating ». Ainsi, de façon préférentielle, a, b est c sont des entiers.

Pour ce faire, on exprime la résistance moteur en mΩ, et on applique à la valeur de tension un gain de 100000, à l'intensité un facteur de 100, et au pas de temps un facteur de 1000.

Ainsi, pour un moteur ayant une résistance nominale de 0,34 Ω et une inductance de 0,000117 H, et pour un contrôleur ayant un pas d'échantillonnage (t) de 100μs, la fonction exponentielle de la relation décrivant la résistance d'un solénoïde, est centrée autour de 340 mΩ au lieu de 0,34 Ω.

La fonction exponentielle s'écrit alors ainsi :

$$e^{-\frac{t*1000}{\frac{L}{R[n-1]}}} = 5,5868e^{-6}R^2 + 2,91e^{-4}R - 0,07014$$

Selon un mode de réalisation préféré, on ajoute un gain de 7000000, afin d'obtenir des coefficients polynomiaux entiers :

$$a = \quad 3$$

$$b = \quad 2037$$

$$c = \qquad 490979$$

La figure 1 est un exemple de résultat illustrant l'estimation de la résistance moteur R*, la tension du moteur U, et l'intensité du moteur i en fonction du temps T.

Sur la figure 1, l'axe des abscisses représente le temps (T) en seconde, et l'axe des ordonnées représente à droite l'intensité du moteur (i) en Ampère, et la tension (U) en Volt, et à gauche la résistance moteur estimée (R*) en Ohm. La courbe pleine épaisse correspond à l'évolution de l'intensité du moteur i. La courbe en pointillé correspond à l'évolution de la tension du moteur U. La courbe pleine fine correspond à l'évolution de la résistance estimée R*.

On observe une estimation précise et en continue de la résistance, dès la phase d'absence de commande en tension (phase inactive du contrôleur (ECU) du moteur). L'évolution de l'estimation pendant cette phase est plus visible sur la figure 2 qui représente un grossissement de la figure 1 autour de 0,0688s.

On décrit maintenant un **premier mode de réalisation** en référence à la figure 3. Selon ce mode de réalisation, aucun capteur n'est nécessaire pour estimer la force de serrage F*. En effet, les deux paramètres connus sont la tension U et l'intensité i du moteur. Puis, la résistance du moteur est estimée (R*) à partir de l'intensité i du moteur et de la tension U du moteur (qui peut être estimée (U*) à partir de la constante moteur estimée K*). Puis la vitesse du moteur ω est estimée (ω*) à partir de la résistance moteur R* estimée, de la tension U et de l'intensité i du moteur. Enfin, la force de serrage F* est estimée à partir de cette vitesse ω*. La tension du moteur (U) peut être déterminée en multipliant la constante moteur estimée (K*) par la vitesse de rotation du moteur estimée (ω*).

On décrit maintenant un **second mode de réalisation** en référence à la figure 4. Selon ce mode de réalisation, on utilise un capteur de vitesse embarqué. Ainsi, les paramètres connus sont la vitesse de rotation ω, la tension U et l'intensité i du moteur. Selon ce mode de réalisation, la force de serrage F* est estimée à partir de l'estimation de la résistance moteur R*, est des trois paramètres connus (la vitesse de rotation ω, la tension U et l'intensité i du moteur). La résistance R* est estimée à partir de deux paramètres connus, l'intensité i et la vitesse ω du moteur, et d'un paramètre estimé, la tension du moteur (U*). Cette dernière est estimée lors d'une étape de vérification de l'estimation de la vitesse de rotation ω* à partir de U (voir le bloc inférieur sur la figure 4, référencé : « Chk ω* : U* »).

L'invention se rapporte également à un **système de freinage** apte à mettre en oeuvre le procédé selon l'invention.

Le système comporte un moteur électrique de freinage, et un contrôleur apte à mettre en œuvre le procédé selon l'invention.

Selon un mode de réalisation, la résistance nominale du moteur est de 0,34 Ω et l'inductance du moteur est de 0,000117 H, et le contrôleur a un temps d'échantillonnage (t) de 100ms.

Selon un mode de réalisation, le système de freinage comporte un contrôleur 16 ou 32 bits.

L'invention se rapporte également à un **véhicule**, comme défini dans la revendication 19 ci-jointe, comprenant le système de freinage selon l'invention.

**Liste des références**

- B : Frein

- T : temps

- i : intensité du moteur

- U : tension du moteur

- U* : tension du moteur estimée

- R* : résistance moteur estimée

- K* : constante moteur

- ω : vitesse de rotation du moteur

- ω* : vitesse de rotation du moteur estimée

- F* : force de serrage estimée

Références liées à la formule d'estimation :

- $R[n]$ : résistance moteur au pas n
- $R[n-1]$ : résistance moteur au pas n-1
- $i[n]$ : intensité du moteur au pas n
- $i[n-1]$ : intensité du moteur au pas n-1
- $V'_{bat}\delta = V_{bat}\delta - K * w$ : avec Vbat, la tension d'alimentation du moteur, $K$, la constante moteur, et $w$, la vitesse de rotation du moteur.
- $t$ : pas d'échantillonnage
- $L$ : inductance moteur
- $a$ :coefficient polynomial
- b :coefficient polynomial
- c :coefficient polynomial

## Revendications

1.   Procédé pour régler la force de serrage (F*) exercée par un frein électromécanique (B) d'un véhicule automobile, le frein (B) comportant un moteur électrique muni d'un arbre rotatif destiné à entraîner des moyens mécaniques de serrage de frein, le moteur électrique étant commandé au moyen d'une commande en tension du type MLI, dans lequel on estime la vitesse de rotation du moteur (ω) à partir d'une estimation de la résistance du moteur (R*) et d'une estimation de la constante moteur (K*), puis on détermine la force de serrage (F*) à partir de l'estimation de la vitesse de rotation du moteur (ω), **caractérisé en ce que** l'on met à jour l'estimation de la résistance du moteur (R*) pendant une phase inactive du contrôleur du moteur d'absence de commande en tension.

2.   Procédé selon la revendication précédente, dans lequel on met à jour l'estimation de la résistance du moteur (R*) au moyen d'une fonction polynomiale d'ordre n, n étant supérieur ou égal à 2, centrée autour de la valeur nominale de la résistance moteur (R*) exprimée selon un nombre entier.

3.   Procédé selon l'une des revendications précédentes, dans lequel on met à jour l'estimation de la résistance du moteur (R*) selon un pas d'échantillonnage inférieur à 1ms.

4.   Procédé selon l'une des revendications précédentes, dans lequel le frein (B) comportant un moteur électrique muni d'un arbre rotatif destiné à entraîner des moyens mécaniques de serrage de frein, on détermine la force de serrage (F*) en fonction de la résistance du moteur mise à jour (R[n]), et un actionneur commande les moyens mécaniques de serrage de frein afin d'appliquer la force de serrage (F*) ainsi estimée.

5.   Procédé selon l'une des revendications précédentes, dans lequel on estime la résistance du moteur (R[n]) à un instant donné à partir d'une valeur précédente de la résistance du moteur (R[n-1]), et en utilisant une relation décrivant la résistance d'un solénoïde dans laquelle la tension (Vbat) est remplacée par la différence (V'bat) entre la tension (Vbat) et la tension du moteur (U).

6.   Procédé selon la revendication précédente, dans lequel on utilise une relation décrivant la résistance d'un solénoïde dans laquelle on remplace la fonction exponentielle par une série de Taylor d'ordre n, n étant supérieur ou égal à 2, centrée autour de la valeur nominale de la résistance moteur exprimée en entier.

7.   Procédé selon la revendication précédente, dans lequel on estime la résistance du moteur (R[n]) à un instant donné au moyen de la relation suivante :

$$R[n] = \frac{V'_{bat}\delta}{i[n]} + \left(\frac{i[n-1]R[n-1]}{i[n]} - \frac{V'_{bat}\delta}{i[n]}\right)\left(a.R[n-1]^2 + b.R[n-1] - c\right)^{\square}$$

avec :

- $R[n]$:résistance moteur au pas n
- $R[n-1]$:résistance moteur au pas n-1
- $i[n]$:intensité du moteur au pas n

➢ $i[n - 1]$:intensité du moteur au pas n-1

➢ $V'_{bat}\delta = V_{bat}\delta - K * w$:avec Vbat, la tension d'alimentation du moteur, K, la constante moteur, et w, la vitesse de rotation du moteur.

➢ $a$ :coefficient polynomial

➢ b :coefficient polynomial

➢ c :coefficient polynomial

8. Procédé selon la revendication précédente, dans lequel

$$a = \quad 0,4523$$

$$b = \quad 0,291$$

$$c = \quad 0,07027$$

9. Procédé selon la revendication 7, dans lequel a, b et c sont des entiers.

10. Procédé selon la revendication précédente, dans lequel :

$$a = \quad 3$$

$$b = \quad 2037$$

$$c = \quad 490979$$

11. Procédé selon la revendication précédente, dans lequel les paramètres de la relation de détermination de la résistance moteur sont exprimés en uint32, après avoir appliqué des gains à et la résistance moteur en m$\Omega$, la valeur de tension est exprimée avec un gain de 100000 l'intensité avec un gain de 100.

12. Procédé selon la revendication précédente, dans lequel on ajoute un gain de 7000000.

13. Procédé selon l'une des revendications 5 à 10, dans lequel la tension du moteur (U*) est déterminée en multipliant la constante moteur (K*) par la vitesse de rotation du moteur ($\omega$*).

14. Procédé selon la revendication précédente, dans lequel la vitesse de rotation du moteur ($\omega$*) est estimée ou mesurée au moyen d'un capteur embarqué.

15. Système de freinage arrangé pour mettre en œuvre le procédé selon l'une quelconque des revendications 1 à 14.

16. Système de freinage selon la revendication précédente, comportant un moteur électrique de freinage, et un contrôleur apte à mettre en œuvre le procédé selon l'une quelconque des revendications 1 à 14.

17. Système de freinage selon la revendication précédente, dans lequel la résistance nominale du moteur est de 0,34 $\Omega$ et l'inductance du moteur est de 0,000117 H, et dans lequel le contrôleur a un temps d'échantillonnage (t) de 100ms.

18. Système de freinage selon la revendication précédente, dans lequel le contrôleur est un contrôleur 16 ou 32 bits.

19. Véhicule comprenant le système de freinage selon l'une des revendications 15 à 18.

**Patentansprüche**

1. Verfahren zum Einstellen der von einer elektromechanischen Bremse (B) eines Kraftfahrzeugs ausgeübten Klemmkraft (F*), wobei die Bremse (B) einen Elektromotor aufweist, der mit einer drehbaren Welle zum Antreiben mechanischer Mittel zum Anziehen der Bremse versehen ist, wobei der Elektromotor mittels eines Spannungsbefehls vom PWM-Typ gesteuert wird, wobei die Drehzahl des Motors (ω) ausgehend von einer Schätzung des Widerstands des Motors (R*) und von einer Schätzung der Motorkonstante (K*) geschätzt wird und anschließend die Klemmkraft (F*) ausgehend von der Schätzung der Drehzahl des Motors (ω) ermittelt wird, **dadurch gekennzeichnet, dass** die Schätzung des Widerstands des Motors (R*) während einer inaktiven Phase der Steuerung des Motors bei fehlendem Spannungsbefehls aktualisiert wird.

2. Verfahren nach dem vorhergehenden Anspruch, wobei die Schätzung des Widerstands des Motors (R*) mittels einer Polynomfunktion n-ten Grades, wobei n größer oder gleich 2, die um den Nennwert des Motorwiderstands (R*), ausgedrückt als ganze Zahl, zentriert ist, aktualisiert wird.

3. Verfahren nach einem der vorhergehenden Ansprüche, wobei die Schätzung des Widerstands des Motors (R*) gemäß einem Abtastschritt kleiner als 1 ms aktualisiert wird.

4. Verfahren nach einem der vorhergehenden Ansprüche, wobei, da die Bremse (B) einen Elektromotor aufweist, der mit einer drehbaren Welle zum Antreiben mechanischer Mittel zum Anziehen der Bremse versehen ist, die Klemmkraft (F*) in Abhängigkeit von dem aktualisierten Widerstand des Motors (R[n]) ermittelt wird und ein Aktuator die mechanischen Mittel zum Anziehen der Bremse steuert, um die so geschätzte Klemmkraft (F*) aufzubringen.

5. Verfahren nach einem der vorhergehenden Ansprüche, wobei der Widerstand des Motors (R[n]) zu einem gegebenen Zeitpunkt ausgehend von einem vorherigen Wert des Widerstands des Motors (R[n-1] ermittelt wird, und unter Verwendung einer Relation, die den Widerstand eines Solenoids beschreibt, in der die Spannung (Vbat) durch die Differenz (V'bat) zwischen der Spannung (Vbat) und der Spannung des Motors (U) ersetzt ist.

6. Verfahren nach dem vorhergehenden Anspruch, wobei eine Relation verwendet wird, die den Widerstand eines Solenoids beschreibt, in der die Exponentialfunktion durch eine Taylor-Reihe n-ten Grades, wobei n größer oder gleich 2, ersetzt ist, die um den Nennwert des Motorwiderstands, ausgedrückt als ganze Zahl, zentriert ist.

7. Verfahren nach dem vorhergehenden Anspruch, wobei der Widerstand des Motors (R[n]) zu einem gegebenen Zeitpunkt mittels der folgenden Relation geschätzt wird:

$$R[n] = \frac{V'_{bat}\delta}{i[n]} + \left(\frac{i[n-1]R[n-1]}{i[n]} - \frac{V'_{bat}\delta}{i[n]}\right)(a.R[n-1]^2 + b.R[n-1] - c)^{\square}$$

wobei:

> *R[n]*: Motorwiderstand bei Schritt n
> *R[n - 1]:* Motorwiderstand bei Schritt n-1
> *i[n]:* Motorstrom bei Schritt n
> *i[n - 1]*: Motorstrom bei Schritt n-1
> $V'_{bat}\delta = V_{bat}\delta$ -K * w: wobei Vbat die Versorgungsspannung:des Motors; K die Motorkonstante und ω die Drehzahl des Motors.
> *a*polynomialer Koeffizient
> b polynomialer Koeffizient
> c polynomialer Koeffizient

8. Verfahren nach dem vorhergehenden Anspruch, wobei

$$a = \quad 0{,}4523$$

$$b = \quad 0{,}291$$

$$c = \quad 0{,}07027$$

9. Verfahren nach Anspruch 7, wobei a, b und c ganze Zahlen sind.

10. Verfahren nach dem vorhergehenden Anspruch, wobei:

$$a = \quad 3$$

$$b = \quad 2037$$

$$c = \quad 490979$$

11. Verfahren nach dem vorhergehenden Anspruch, wobei die Parameter der Relation zum Ermitteln des Motorwiderstands in uint32 ausgedrückt sind, nach Anwendung der Verstärkungsfaktoren, und der Motorwiderstand in m$\Omega$, der Spannungswert mit einem Verstärkungsfaktor von 100000 ausgedrückt ist, der Strom mit einem Verstärkungsfaktor von 100.

12. Verfahren nach dem vorhergehenden Anspruch, wobei ein Verstärkungsfaktor von 7000000 hinzugefügt wird.

13. Verfahren nach einem der Ansprüche 5 bis 10, wobei die Spannung des Motors (U*) ermittelt wird, indem die Motorkonstante (K*) mit der Drehzahl des Motors ($\omega$*) multipliziert wird.

14. Verfahren nach dem vorhergehenden Anspruch, wobei die Drehzahl des Motors ($\omega$*) geschätzt oder mittels eines On-Board-Sensors gemessen wird.

15. Bremssystem, angeordnet zum Durchführen des Verfahrens nach einem der Ansprüche 1 bis 14.

16. Bremssystem nach dem vorhergehenden Anspruch, aufweisend einen elektrischen Bremsmotor und eine Steuerung, die zum Durchführen des Verfahrens nach einem der Ansprüche 1 bis 14 eingerichtet ist.

17. Bremssystem nach dem vorhergehenden Anspruch, wobei der Nennwiderstand des Motors 0,34 $\Omega$ ist und die Induktivität des Motors 0,000117 H ist, und wobei die Steuerung eine Abtastzeit (t) von 100 ms aufweist.

18. Bremssystem nach dem vorhergehenden Anspruch, wobei die Steuerung eine 16-Bit- oder 32-Bit-Steuerung ist.

19. Fahrzeug, umfassend das Bremssystem nach einem der Ansprüche 15 bis 18.

**Claims**

1. Method for adjusting the clamping force (F*) exerted by an electromechanical brake (B) of a motor vehicle, the brake (B) comprising an electric motor provided with a rotating shaft which is intended to drive mechanical brake-application means, the electric motor being controlled by means of a PWM-type voltage control, in which the rotational speed of the motor ($\omega$) is estimated from an estimate of the motor resistance (R*) and an estimate of the motor constant (K*), and then the clamping force (F*) is determined from the estimate of the rotational speed of the motor ($\omega$), **characterised in that** the estimate of the motor resistance (R*) is updated during an idle phase of the motor controller with no voltage control.

2. Method according to the preceding claim, in which the estimate of the motor resistance (R*) is updated using a polynomial function of order n, n being greater than or equal to 2, centred around the nominal value of the motor resistance (R*) expressed as an integer.

3. Method according to one of the preceding claims, in which the estimate of the motor resistance (R*) is updated according to a sampling interval less than 1 ms.

4. Method according to one of the preceding claims, in which, the brake (B) comprising an electric motor provided with a rotating shaft which is intended to drive mechanical brake application means, the clamping force (F*) is determined according to the updated motor resistance (R[n]), and an actuator controls the mechanical brake application means to apply the clamping force (F*) so estimated.

5. Method according to one of the preceding claims, in which the motor resistance (R[n]) is estimated at a given time from a previous value of the motor resistance (R[n-1]), and using a relation describing the resistance of a solenoid in which the voltage (Vbat) is replaced by the difference (V'bat) between the voltage (Vbat) and the motor voltage (U).

6. Method according to the preceding claim, in which a relation is used describing the resistance of a solenoid in which the exponential function is replaced by a Taylor series of order n, n being greater than or equal to 2, centred around the nominal value of the motor resistance expressed as an integer.

7. Method according to the preceding claim, in which the motor resistance (R[n]) is estimated at a given time using the following relation:

$$R[n] = \frac{V'_{bat}\delta}{i[n]} + \left(\frac{i[n-1]R[n-1]}{i[n]} - \frac{V'_{bat}\delta}{i[n]}\right)(a.R[n-1]^2 + b.R[n-1] - c)$$

where:

> $R[n]$: motor resistance at interval n
> $R[n - 1]$: motor resistance at interval n-1
> $i[n]$: motor current at interval n
> $i[n - 1]$: motor current at interval n-1
> $V'_{bat}\delta = V_{bat}\delta - K * w$: where Vbat is the motor supply voltage, K is the motor constant, and $w$ is the rotational speed of the motor.
> $a$:polynomial coefficient
> b: polynomial coefficient
> c: polynomial coefficient

8. Method according to the preceding claim, in which:

$$a = \quad 0.4523$$

$$b = \quad 0.291$$

$$c = \quad 0.07027$$

9. Method according to claim 7, wherein a, b and c are integers.

10. Method according to the preceding claim, in which:

$$a = \quad 3$$

$$b = \quad 2037$$

$$c = \quad 490979$$

11. Method according to the preceding claim, in which the parameters of the relation for determining the motor resistance are expressed in uint32, after expressing the motor resistance in mΩ, the voltage value is expressed with a gain of 100000 and the current is expressed with a gain of 100.

12. Method according to the preceding claim, in which a gain of 7000000 is added.

13. Method according to one of claims 5 to 10, in which the motor voltage (U*) is determined by multiplying the motor constant (K*) by the rotational speed of the motor (ω*).

14. Method according to the preceding claim, in which the rotational speed of the motor (ω*) is estimated or measured using an onboard sensor.

**15.** Braking system configured to implement the method according to any one of claims 1 to 14.

**16.** Braking system according to the preceding claim, comprising a braking electric motor, and a controller adapted to implement the method according to any one of claims 1 to 14.

**17.** Braking system according to the preceding claim, in which the nominal resistance of the motor is 0.34 $\Omega$ and the inductance of the motor is 0.000117 H, and in which the controller has a sampling time (t) of 100 ms.

**18.** Braking system according to the preceding claim, in which the controller is a 16-bit or 32-bit controller.

**19.** Vehicle comprising the braking system according to one of claims 15 to 18.

[Fig. 1]

[Fig. 2]

[Fig. 3]

[Fig. 4]

**RÉFÉRENCES CITÉES DANS LA DESCRIPTION**

**Documents brevets cités dans la description**

- WO 2019131659 A

- DE 102014203350